# EUROPÄISCHE PATENTSCHRIFT

(11) **EP 0 543 843 B1**
(45) Veröffentlichungstag und Bekanntmachung des Hinweises auf die Patenterteilung: **08.06.1994**
(21) Anmeldenummer: 91914054.1
(22) Anmeldetag: 29.07.1991
(51) Int. Cl.: C01B 13/14, C01F 5/16, C01F 5/14, C08K 3/22

(54) **VERFAHREN ZUR HERSTELLUNG VON METALLHYDROXIDEN MIT GERINGER SPEZIFISCHER OBERFLÄCHE**
PROCESS FOR PRODUCING METAL HYDROXIDES WITH A SMALL SPECIFIC AREA
PROCEDE DE PRODUCTION D'HYDROXYDES METALLIQUES AYANT UNE SUPERFICIE SPECIFIQUE REDUITE

(30) Priorität: 18.08.1990 DE 4026246
(43) Veröffentlichungstag der Anmeldung: 02.06.1993
(73) Patentinhaber: CHEMSON POLYMER-ADDITIVE GESELLSCHAFT M.B.H., 2361 Laxenburg (AT)
(72) Erfinder: WURMBAUER, Dieter, A-2340 Mödling (AT); KRIVANEC, Heinz, A-1130 Wien (AT)
(74) Vertreter: Becker, Thomas, Dr., Dipl.-Ing.
(86) Internationale Anmeldenummer: EP9101422
(87) Internationale Veröffentlichungsnummer: WO9203375

(56) Entgegenhaltungen:
- DE-C- 53 574
- Patent Abstracts of Japan, vol. 014, no. 123 (C-0698) 8 March 1990 & JP, A, 01320220 (NIPPON CHEM IND) 26.12.1989
- Patent Abstracts of Japan, vol. 14, no. 211 (C-715) 2 May 1990 & JP, A, 02048414 (MITSUBISHI MINING CEMENT) 19 Febr. 1990
- World Patents Index, Section Ch, Week 7306, 1973, Derwent Publ. Ltd., London, GB; Class L, AN 06674U & DD, A, 93541 (W. Grunwoldt) see abstract
- Chemical Abstracts, vol. 112, No. 12, 19 March 19990, Columbus, Ohio, US; abstract no. 101652A, K.WILL et al.: "Method for hydrating magnesia obtained by thermal decomposition of magnesium chloride"
- Chemical Abstracts, vol. 87, no. 16, 17 Octobre 1977, Columbus, Ohio, US; abstract no. 119965E, V.S. Komarov et al.: "Magnesium hydroxide"

## Beschreibung

Die Erfindung betrifft ein Verfahren zur Herstellung von Metallhydroxiden mit geringer spezifischer Oberfläche.

Sowohl der Stand der Technik als auch die Erfindung werden nachstehend anhand von Magnesiumhydroxid näher beschrieben. Diese Darstellung erfolgt jedoch lediglich beispielhaft. Die Erfindung ist ebenso auf andere Metallhydroxide, wie Calciumhydroxid, anwendbar, wenngleich Magnesiumhydroxid in besonderem Maße bevorzugt ist.

Zum Beispiel bei der Herstellung von Papier, Kunststoff oder Kautschuk ist es bekannt, verschiedenartige Füllstoffe zuzumischen, um beispielsweise die mechanischen Eigenschaften, insbesondere die Festigkeit und den Elastizitätsmodul, zu verbessern. Bei der Kunststoffherstellung, insbesondere bei der Herstellung halogenfreier, flammgeschützter Kunststoffe, werden vor allem Metallhydroxide wie Aluminium- oder Magnesiumhydroxid verwendet.

So enthalten zum Beispiel Kunststoffe für Kabelummantelungen neuerdings Magnesiumhydroxid als Füllstoff. Da die spezifische Oberfläche des Füllstoffes die Viskosität der Polymerschmelze stark beeinflußt (wobei höhere spezifische Oberflächen höhere Viskositätswerte ergeben), trachtet man, die spezifische Oberfläche des Füllstoffs möglichst gering zu halten, um die Verarbeitbarkeit nicht nachteilig durch die Füllstoff-Zugabe zu beeinflussen.

Ziel der Erfindung ist es danach, ein Verfahren zur Herstellung von Metallhydroxiden mit möglichst geringer spezifischer Oberfläche anzubieten. Unter möglichst geringer spezifischer Oberfläche wird eine Oberfläche verstanden, die vorzugsweise geringer ist als die, die sich bei Aufbereitung eines Metallhydroxids nach vergleichbaren einfachen Verfahren ergibt.

Magnesiumhydroxid, welches sich bei der Fällung aus Meerwasser durch Zusatz von Kalkmilch oder gebranntem Dolomit ergibt, weist beispielsweise eine spezifische Oberfläche von etwa 40 m²/g auf (gemessen nach der B.E.T.-Methode) und ist damit für den Einsatz als Füllstoff für Kunststoffe nicht geeignet.

Auch die Fällung von Magnesiumhydroxid aus natürlichen oder künstlichen Lösungen (beispielsweise Solen, wie sie in der Kali-Industrie anfallen), ergibt eine zu hohe spezifische Oberfläche des gefällten Hydroxids.

Es ist weiter aus Patent Abstracts of Japan, Vol.014, No 123 (C-0698) bekannt, Magnesiumhydroxid aus wässrigen Magnesiumsalzlösungen durch Zugabe von unterstöchiometrischen Mengen eines Fällungsmittels, wie zum Beispiel Natronlauge, zu fällen und das daraus entstehende basische Salz der Formel Mg(OH)ₓ(A)_{y} ^{.} zH₂O (wobei A ein Anion wie zum Beispiel Cl⁻, SO₄⁻⁻, NO₃⁻ bedeutet) abzutrennen und in einem Druckgefäß einer Nachbehandlung zu unterziehen, wobei sich die basischen Salze spalten und ein Magnesiumhydroxid entsteht, welches eine spezifische Oberfläche von weniger als 15 m²/g aufweisen kann. Das resultierende Produkt weist zwar eine relativ geringe spezifische Oberfläche auf; das Verfahren ist jedoch kompliziert und besitzt den weiteren Nachteil, daß Abwässer mit einem hohen Salzgehalt entsorgt werden müssen.

Der Erfindung liegt die überraschende Erkenntnis zugrunde, daß ein Metallhydroxid geringer spezifischer Oberfläche sich in einem einfachen Prozeß dadurch erreichen läßt, daß - ausgehend von einem Metalloxid - dieses zunächst unter Zugabe von Wasser zu Metallhydroxid hydratisiert wird, wobei in dieser Stufe eine Autoklavbehandlung ausgeschlossen wird, wie sie in der DE-PS 53574 vorgeschlagen wird, und anschließend in einem Autoklaven so lange unter Druck behandelt wird, bis sich die gewünschten spezifischen Oberflächen von unter 20 m²/g, insbesondere kleiner 10 m²/g eingestellt haben.

Bei diesem Verfahren kann von einem konventionellen Metalloxid, zum Beispiel kaustisch gebranntem Magnesiumoxid oder einem Magnesiumoxid, wie es bei der thermischen Zersetzung von Magnesiumchlorid in einer Sprührostanlage anfällt, ausgegangen werden.

Im Gegensatz zu dem vorstehend genannten bekannten Fällungsverfahren entfällt jegliche Fällungsreaktion und Zugabe von Fremdstoffen (ausgenommen Wasser).

Auch während der anschließenden Autoklavbehandlung wird nur das zuvor hergestellte Magnesiumhydroxid unter Druck bei erhöhter Temperatur - ohne weitere Manipulationen und Zusätze - behandelt.

Überraschenderweise hat sich herausgestellt, daß allein die genannte Autoklavbehandlung ausreicht, die spezifische Oberfläche des Metallhydroxids - in Abhängigkeit von der Autoklavtemperatur, dem Druck und der Verweilzeit - deutlich zu erniedrigen, und zwar auf Werte bis unterhalb 10 m²/g.

Das Material kann anschließend direkt aus dem Autoklaven entnommen und nach Trocknung zum Beispiel als halogenfreier, flammhemmender Füllstoff für Kunststoffe verwendet werden.

Die Erfindung ist in ihrer allgemeinsten Ausführungsform durch die Merkmale des Anspruches 1 gekennzeichnet. Vorteilhafte Ausführungsformen beschreiben die Merkmale der Unteransprüche sowie die sonstigen Anmeldungsunterlagen.

Im Sinne des erfindungsgemäßen Ziels ist es vorteilhaft, das Metallhydroxid als wässrige Suspension in den Autoklaven zu geben. Dabei sollte die Suspension einen Feststoffgehalt (Gehalt an Metallhydroxid) zwischen 10 und 70 Gew.-%, vorzugsweise zwischen 30 und 50 Gew.-% aufweisen.

Im Autoklaven werden die Feststoffteilchen in der Suspension unter Druck zu Teilchen geringerer spezifischer Oberfläche umgewandelt.

Als besonders vorteilhaft hat sich weiter herausgestellt, die Hydratisierung des Metalloxids zu Metallhydroxid unter Verwendung von deionisiertem Wasser vorzunehmen. Hierdurch wird die Reinheit des Materials erhöht.

Dabei ist es besonders vorteilhaft, dafür Sorge zu tragen, daß die Suspension sich nicht auf Temperaturen über 50 bis 60° C erwärmt. Die Erwärmung ist eine Folge der Hydratationsreaktion. Im einfachsten Fall wird zu diesem Zweck die Temperatur überwacht und zu gegebener Zeit kaltes, deionisiertes Wasser zugegeben.

Eine homogene Mischung der Suspension während der Hydratationsreaktion fördert die Bildung optimaler Hydroxid-Kristalle.

Je nachdem, welchem Anwendungsbereich das Metallhydroxid später zugeführt werden soll, kann das hydratisierte Material vor der Autoklavbehandlung nochmals gewaschen und/oder gemahlen werden, wobei die Mahlung auf Korngrößen kleiner 5 »m erfolgen sollte.

Die Autoklavbehandlung selbst erfolgt vorzugsweise im Temperaturbereich zwischen 100 und 200° C. Bei einer Temperatur von beispielsweise 160 °C liegt der Sättigungsdampfdruck bei etwa 6 bar.

In Abhängigkeit von der gewählten Temperatur und dem sich danach einstellenden Druck schlägt die Erfindung eine Verweilzeit im Autoklaven zwischen 2 und 24 Stunden, vorzugsweise 8 bis 12 Stunden vor.

Das Aufheizen der Suspension auf die vorgesehene Temperatur erfolgt dabei durch die Zuführung der Wärme, die bei der Kondensation des Wasserdampfes an den kälteren Oberflächen der Suspension, und hier insbesondere der Feststoffpartikel, freigesetzt wird.

Eine besonders gleichmäßige Wärmeübertragung wird dadurch gefördert, daß die Suspension während der Autoklavbehandlung umgewälzt wird. Hierdurch werden auch die Verweilzeiten insgesamt verkürzt.

Die Autoklavbehandlung wird im einzelnen in Abhängigkeit von der gewünschten resultierenden spezifischen Oberfläche des Metallhydroxids geführt. Dies kann empirisch ermittelt werden.

Nach der Autoklavbehandlung wird das Material entnommen und getrocknet. Die Trocknung erfolgt beispielsweise in einem bekannten Sprühtrockner.

Das erfindungsgemäße Verfahren ist einfach auszuführen, vermeidet jegliche Umweltbelastung und führt zu Metallhydroxiden mit spezifischen Oberflächen von zum Teil unter 10 m²/g. Es ist damit den aus dem Stand der Technik bekannten Verfahren weit überlegen.

Die Erfindung wird nachstehend anhand zweier Ausführungsbeispiele näher erläutert:

### Beispiel 1:

1 kg MgO-Kauster werden in 5 l deionisiertes Wasser eingerührt. Dabei wird die Temperatur der gebildeten Suspension kontinuierlich gemessen. Droht die Temperatur der Suspension über 50 °C anzusteigen, wird weiteres kaltes Wasser zugegeben.

Die Mischung wird über eine gewisse Zeit gerührt und danach abfiltriert. Der entstehende Filterkuchen wird anschließend mit weiterem deionisiertem Wasser zu einer 30 Gew.-% Feststoff enthaltenen Suspension angerührt und in einer Kugelmühle so weit aufgemahlen, daß der mittlere Teilchendurchmesser d₅₀ bei 2,5 »m liegt.

Nach Abtrennen der gemahlenen Suspension von den Mahlkörpern wird die Probe in zwei gleich große Mengen getrennt.

Der erste Teil wird anschließend in einem mit gespanntem Wasserdampf beschickten Autoklaven 12 Stunden lang unter einem Druck von 6,5 bar und einer Temperatur von etwa 160 °C behandelt. Nach Entnahme aus dem Autoklaven wird die Suspension in einem Sprühtrockner getrocknet.

Der andere Teil wird - ohne Autoklavbehandlung - direkt sprühgetrocknet.

Für beide Proben ergeben sich danach folgende spezifische Oberflächen, gemessen nach B.E.T.:
Probe 1 (mit Autoklavbehandlung): 9,8 m²/g
Probe 2 (ohne Autoklavbehandlung): 21,4 m²/g.

### Beispiel 2:

20 kg eines MgO-Kausters aus einer Sprührostanlage werden in 50 l deionisiertes Wasser eingerührt. Anschließend wird weiteres deionisiertes Wasser bis zu einem Gesamtvolumen der Suspension von 90 l zugegeben. Diese wird anschließend 24 Stunden lang gerührt, danach abfiltriert und der Filterkuchen erneut mit deionisiertem Wasser zu einer Suspension mit 50 Gew.-% Feststoffanteil aufbereitet.

Die Hälfte der Suspension wird anschließend in einen Autoklaven gefüllt. Der Autoklav wird danach mit gespanntem Wasserdampf unter Einstellung einer Temperatur von 180° C beschickt. Die Suspension wird danach einer 8-stündigen Druckbehandlung unterworfen. Anschließend wird die entnommene Probe analog Beispiel 1 in einem Sprühtrockner getrocknet.

Die verbleibende Vergleichsprobe wird wiederum direkt - ohne Autoklavbehandlung - dem Sprühtrockner zugeführt.

Die spezifischen Oberflächen beider Proben ergeben sich wie folgt:
Probe 1 (druckbehandelte Probe) 8,9 m²/g
Probe 2 (ohne Druckbehandlung): 17 m²/g.

Die Beispiele zeigen, daß die Autoklavbehandlung zu einer mindestens 50 %-igen Reduzierung der spezifischen Oberfläche führt.

## Patentansprüche

1. Verfahren zur Herstellung von Metallhydroxiden mit geringer spezifischer Oberfläche,
**dadurch gekennzeichnet,**
daß zunächst ein Metallhydroxid durch Hydratation des entsprechenden Metalloxids in Anwesenheit von Wassergebildet wird, wobei eine Autoklavbehandlung ausgeschlossen ist, und das Metallhydroxid anschließend in einem Autoklaven so lange unter Druck behandelt wird, bis sich eine gewünschte spezifische Oberfläche kleiner 20 m²/g, vorzugsweise kleiner 10 m²/g eingestellt hat.

2. Verfahren nach Anspruch 1,
**dadurch gekennzeichnet,**
daß das Metallhydroxid als wässrige Suspension in den Autoklaven gegeben wird.

3. Verfahren nach Anspruch 2,
**dadurch gekennzeichnet,**
daß eine Suspension mit einem Feststoffgehalt zwischen 10 und 70 Gew.-% in den Autoklaven gegeben wird.

4. Verfahren nach Anspruch 3,
**dadurch gekennzeichnet,**
daß eine Suspension mit einem Feststoffgehalt zwischen 30 und 50 Gew.-% in den Autoklaven gegeben wird.

5. Verfahren nach einem der Ansprüche 1 bis 4,
**dadurch gekennzeichnet,**
daß die Hydratisierung des Metalloxids zu Metallhydroxid unter Verwendung von deionisiertem Wasser erfolgt.

6. Verfahren nach einem der Ansprüche 1 bis 5,
**dadurch gekennzeichnet,**
daß die Hydratationsstufe des Metalloxids zum Metallhydroxid so ausgeführt wird, daß die Temperatur der Suspension 50 bis 60° C nicht übersteigt.

7. Verfahren nach einem der Ansprüche 1 bis 6,
**dadurch gekennzeichnet,**
daß das primär gebildete Metallhydroxid vor der Autoklavbehandlung gewaschen und/oder gemahlen wird.

8. Verfahren nach Anspruch 7,
**dadurch gekennzeichnet,**
daß das primär gebildete Metallhydroxid vor der Autoklavbehandlung auf eine Korngröße kleiner 5 »m gemahlen wird.

9. Verfahren nach einem der Ansprüche 7 oder 8,
**dadurch gekennzeichnet**,
daß das primär gebildete Metallhydroxid auf eine Feinheit von d₅₀ zwischen 1 und 4 »m gemahlen wird.

10. Verfahren nach einem der Ansprüche 1 bis 9,
**dadurch gekennzeichnet**,
daß die Autoklavbehandlung unter Anwendung von gespanntem Wasserdampf erfolgt.

11. Verfahren nach einem der Ansprüche 1 bis 10,
**dadurch gekennzeichnet,**
daß die Autoklavbehandlung bei Temperaturen zwischen 100 und 200° C durchgeführt wird.

12. Verfahren nach Anspruch 11
**dadurch gekennzeichnet,**
daß die Autoklavbehandlung bei Temperaturen zwischen 140 und 180° C durchgeführt wird.

13. Verfahren nach einem der Ansprüche 1 bis 12,
**dadurch gekennzeichnet**,
daß die Autoklavbehandlung über einen Zeitraum von 2 bis 24 Stunden durchgeführt wird.

14. Verfahren nach einem der Ansprüche 1 bis 13,
**dadurch gekennzeichnet,**
daß die Suspension im Autoklaven umgewälzt wird.

15. Verfahren nach einem der Ansprüche 1 bis 14,
**dadurch gekennzeichnet**,
daß das aus dem Autoklaven entnommene Material anschließend getrocknet wird.

16. Verfahren nach Anspruch 15,
**dadurch gekennzeichnet**,
daß das Material sprühgetrocknet wird.

17. Verfahren nach einem der Ansprüche 1 bis 16,
**dadurch gekennzeichnet,**
daß als Metalloxid Magnesiumoxid eingesetzt wird.

## Claims

1. Process for preparing metal hydroxides of small specific surface, **characterized in that** a metal hydroxide is first formed by hydrating the corresponding metal oxide in the presence of water, but under exclusion of an autoclave treatement, and the metal hydroxide is subsequently treated under pressure in an autoclave until a desired specific surface of less than 20 m²/g and preferably less than 10 m²/g is obtained.

2. Process in accordance with claim 1, **characterized in that** the metal hydroxide is charged into the autoclave in the form of an aqueous suspension.

3. Process in accordance with claim 2, **characterized in that** a suspension with a solids content between 10 and 70 wt.% is charged into the autoclave.

4. Process in accordance with claim 3, **characterized in that** a suspension with a solids content between 30 and 50 wt.% is charged into the autoclave.

5. Process in accordance with one of the claims 1 through 4, **characterized in that** the hydration of the metal oxide into the metal hydroxide is carried out by using deionized water.

6. Process in accordance with one of the claims 1 through 5, **characterized in that** the step of hydration of the metal oxide into the metal hydroxide is carried out such that the temperature of the suspension does not exceed 50°C to 60°C.

7. Process in accordance with one of the claims 1 through 6, **characterized in that** the metal hydroxide formed primarily is washed and/or ground prior to the autoclave treatment.

8. Process in accordance with claim 7, **characterized in that** the metal hydroxide formed primarily is ground to a particle size below 5 microns prior to the autoclave treatment.

9. Process in accordance with one of the claims 7 or 8, **characterized in that** the metal hydroxide formed primarily is ground to a fineness d₅₀ between 1 and 4 microns.

10. Process in accordance with one of the claims 1 through 9, **characterized in that** the autoclave treatment is carried out by using live steam.

11. Process in accordance with one of the claims 1 through 10, **characterized in that** the autoclave treatment is carried out at temperatures between 100°C and 200°C.

12. Process in accordance with claim 11, **characterized in that** the autoclave treatment is carried out at temperatures between 140°C and 180°C.

13. Process in accordance with one of the claims 1 through 12, **characterized in that** the autoclave treatment is carried out over a period of 2 to 24 hours.

14. Process in accordance with one of the claims 1 through 13, **characterized in that** the suspension is circulated in the autoclave.

15. Process in accordance with one of the claims 1 through 14, **characterized in that** the material removed from the autoclave is subsequently dried.

16. Process in accordance with claim 15, **characterized in that** the material is spray-dried.

17. Process in accordance with one of the claims 1 through 16, **characterized in that** magnesium oxide is used as the metal oxide.

## Revendications

1. Procédé de fabrication d'hydroxydes métalliques ayant une surface spécifique réduite, caractérisé par le fait que l'on forme d'abord un hydroxyde métallique par hydratation de l'oxyde métallique correspondant en présence d'eau, en excluant tout traitement par autoclave, et l'on traite ensuite l'hydroxyde métallique dans un autoclave sous pression, pendant une durée suffisante pour établir la surface spécifique souhaitée, à une valeur inférieure à 20 m²/g, de préférence inférieure à 10 m²/g.

2. Procédé selon la revendication 1, caractérisé en ce que l'hydroxyde métallique est introduit dans l'autoclave, sous forme de suspension aqueuse.

3. Procédé selon la revendication 2, caractérisé en ce que l'on introduit dans l'autoclave une suspension, ayant une teneur en solide comprise entre 10 et 70 % en poids.

4. Procédé selon la revendication 3, caractérisé en ce que l'on introduit dans l'autoclave une suspension, ayant une teneur en solide comprise entre 30 et 50 % en poids.

5. Procédé selon l'une des revendications 1 à 4, caractérisé en ce que l'hydratation de l'oxyde métallique pour donner un hydroxyde métallique s'effectue avec utilisation d'eau désionisée.

6. Procédé selon l'une des revendications 1 à 5, caractérisé en ce que l'étage d'hydratation de l'oxyde métallique pour donner de l'hydroxyde métallique est conçu de façon à ce que la température de la suspension ne dépasse pas 50 à 60 °C.

7. Procédé selon l'une des revendications 1 à 6, caractérisé en ce que l'hydroxyde métallique primaire formé est lavé et/ou moulu avant traitement dans l'autoclave.

8. Procédé selon la revendication 7, caractérisé en ce que l'hydroxyde métallique primaire formé est moulu, avant traitement dans l'autoclave, pour atteindre une taille granulaire inférieure à 5 »m.

9. Procédé selon l'une des revendications 7 ou 8, caractérisé en ce que l'hydroxyde métallique primaire formé est moulu pour obtenir une finesse d₅₀, comprise entre 1 et 4 »m.

10. Procédé selon l'une des revendications 1 à 9, caractérisé en ce que le traitement par autoclave s'effectue sous une atmosphère de vapeur d'eau.

11. Procédé selon l'une des revendications 1 à 10, caractérisé en ce que le traitement par autoclave est effectué à des températures situées entre 100 et 200 °C.

12. Procédé selon la revendication 11, caractérisé en ce que le traitement par autoclave est effectué à des températures situées entre 140 et 180 °C.

13. Procédé selon l'une des revendications 1 à 12, caractérisé en ce que le traitement par autoclave est effectué pendant une durée allant de 2 à 24 heures.

14. Procédé selon l'une des revendications 1 à 13, caractérisé en ce que la suspension est soumise à une circulation dans l'autoclave.

15. Procédé selon l'une des revendications 1 à 14, caractérisé en ce que le matériau prélevé de l'autoclave est ensuite séché.

16. Procédé selon la revendication 15, caractérisé en ce que le matériau est séché par pulvérisation.

17. Procédé selon l'une des revendications 1 à 16, caractérisé en ce que l'on utilise comme oxyde métallique de l'oxyde de magnésium.
